# EUROPÄISCHE PATENTANMELDUNG

(11) **EP 4 477 470 A1**
(43) Veröffentlichungstag der Anmeldung: **18.12.2024**
(21) Anmeldenummer: 24182599.1
(22) Anmeldetag: 17.06.2024
(51) Int. Cl.: B60R 3/02

(54) **FAHRZEUGTREPPE**

(30) Priorität: 17.06.2023 LU 103151
(71) Anmelder: ITS Nutzfahrzeuge GmbH, 72793 Pfullingen (DE)
(72) Erfinder: KORN, Rafael, 72793 Pfullingen (DE)
(74) Vertreter: Paustian & Partner Patentanwälte mbB

(57) **Zusammenfassung**

Eine Fahrzeugtreppe (10) umfasst ein zumindest zweiteiliges aus bzw. von einem Fahzeugaufbau (20) ausziehbares Treppengestell (30). Das Treppengestell (30) umfasst zumindest ein erstes Gestellteil (31) und ein zweites Gestellteil (32). Das erste Gestellteil ist mit dem zweiten Gestellteil um ein erste Schwenkachse (51) schwenkbar verbunden. Das zweite Gestellteil ist mit dem Fahrzeugaufbau um eine zweite Schwenkachse (52) schwenkbar verbunden. Das Treppengestell kann in zumindest eine eingeschobene Position, eine erste Position und eine zweite Position gebracht werden. In der ersten Position ist das erste Gestellteil um die erste Schwenkachse schwenkbar. In der zweiten Position sind das erste und zweite Gestellteil um die zweite Schwenkachse schwenkbar und fluchten. Die Schwenkachsen liegen in Ebenen, welche parallel zu einer Fahrzeugaufstandsfläche sind.

## Beschreibung

Die vorliegende Erfindung bezieht sich im Allgemeinen auf eine Fahrzeugtreppe. Insbesondere bezieht sich die vorliegende Erfindung auf eine abknickbare Fahrzeugtreppe.

Fahrzeugtreppen bzw. Einstiegshilfen werden dazu verwendet in meist höhere (bezogen auf eine Fahrzeugaufstandsfläche) Fahrzeugaufbauten einzusteigen. Nachteilig ist bei den bekannten Lösungen, dass die Fahrzeugtreppen nicht schnell verwendet werden können, da sie immer in Gänze in einen betriebsfähigen Zustand gebracht werden müssen. Auch benötigen die bekannten Lösungen verhältnismäßig viel Platz neben dem Fahrzeug.

Um den voran genannten Nachteilen zu begegnen hat es die vorliegende Erfindung zur Aufgabe eine Fahrzeugtreppe vorzuschlagen, die schnell zu verwenden und platzsparend ist.

Die voran genannte Aufgabe wird durch eine Fahrzeugtreppe mit allen Merkmalen des beigefügten Anspruch 1 gelöst.

Vorteilhafte Ausgestaltungen der Erfindung sind in den abhängigen Ansprüchen angegeben und werden nachfolgend wie der allgemeine Erfindungsgedanke im Einzelnen erläutert.

Eine Fahrzeugtreppe nach einem Aspekt der vorliegenden Anmeldung umfasst ein zumindest zweiteiliges, in einem Einbauzustand der Fahrzeugtreppe (an einem Fahrzeug) aus bzw. von einem Fahrzeugaufbau ausziehbares Treppengestell. Das Treppengestell umfasst zumindest ein erstes Gestellteil und ein zweites Gestellteil. Das erste Gestellteil ist mit dem zweiten Gestellteil um eine erste Schwenkachse schwenkbar verbunden. Das zweite Gestellteil ist mit dem Fahrzeugaufbau um eine zweite Schwenkachse schwenkbar verbunden. Das Treppengestell kann in zumindest eine eingeschobene Position, eine erste Position und eine zweite Position gebracht werden. In der ersten Position ist das erste Gestellteil um die erste Schwenkachse schwenkbar. In der zweiten Position sind das erste und zweite Gestellteil um die zweite Schwenkachse schwenkbar und fluchten miteinander. Die Schwenkachsen liegen in Ebenen, welche parallel zu einer Aufstandsfläche eines Fahrzeuges (Fahrzeugaufstandsfläche) sind, an welches die Fahrzeugtreppe in einem Einbauzustand montiert ist. Die Fahrzeugtreppe ist in der ersten und zweiten Position selbsthaltend. Dies kann den Vorteil haben, dass für schnelle Zugänge zum Fahrzeugaufbau nicht immer die gesamte Treppe ausgezogen werden muss.

Mit anderen Worten kann das Treppengestell in einem Einbauzustand der Fahrzeugtreppe aus bzw. von einem Fahrzeugaufbau ausgezogen werden, wobei in der ersten Position nur der erste Gestellteil um die erste Schwenkachse schwenkt und zum Einstieg in den Fahrzeugaufbau benutzt werden kann. In der zweiten Position wird das Treppengestell weiter ausgezogen und das erste Gestellteil wird mit dem zweiten Gestellteil ausgerichtet und damit wieder um die erste Schwenkachse zurückgeschwenkt, sodass dann erstes und zweites Gestellteil miteinander fluchten und zusammen um die zweite Schwenkachse geschwenkt werden können.

Nach einem weiteren Aspekt der vorliegenden Anmeldung ist das Treppengestell mit einem Podest verbunden. Das Podest ist mit dem Treppengestell in einem Einbauzustand der Fahrzeugtreppe aus dem Fahrzeugaufbau ausziehbar. Das zweite Gestellteil ist schwenkbar um die zweite Schwenkachse mit dem Podest verbunden. Dies kann den Vorteil haben, dass eine Trittsicherheit am Fahrzeugaufbau, z.B. vor einer Fahrzeugtüre, erhöht wird.

Nach einem weiteren Aspekt der vorliegenden Anmeldung ist das Treppengestell in einem Einbauzustand der Fahrzeugtreppe mit dem Podest drehbar bezüglich dem Fahrzeugaufbau. Damit kann das Treppengestell beliebig zum Fahrzeugaufbau positioniert werden, ganz wie das z.B. durch ein Gelände vorgegeben wird, auf dem das Fahrzeug steht. Weiterhin kann das Treppengestell so gedreht werden, dass sich ein Benutzer der Treppe am Fahrzeugaufbau bei der Verwendung der Treppe abstützen kann. Dies kann den Vorteil haben, dass eine Flexibilität in der Verwendung der Fahrzeugtreppe erhöht wird.

Nach einem weiteren Aspekt der vorliegenden Anmeldung steht in einem Einbauzustand der Fahrzeugtreppe der erste Gestellteil in der ersten Position nicht auf einer Fahrzeugstandfläche auf. In der zweiten Position steht der erste Gestellteil auf der Fahrzeugstandfläche auf. Dies kann den Vorteil haben, dass die Treppe somit in der ersten Position platzsparend verwendet werden kann, da die Möglichkeit besteht sie nahe am Fahrzeug zu verwenden, weil sie am Fahrzeug abwärts hängen und dann wie eine Leiter verwendet werden kann.

Nach einem weiteren Aspekt der vorliegenden Anmeldung werden erste Stufen des ersten Gestellteils benutzbar, wenn dieses von der eingeschobenen Position in die erste Position gebracht wird. Dies kann den Vorteil haben, dass die Fahrzeugtreppe in einem eingeschobenen Zustand platzsparend ist.

Nach einem weiteren Aspekt der vorliegenden Anmeldung werden zweite Stufen des zweiten Gestellteils benutzbar, wenn das Treppengestell von der ersten Position in die zweite Position gebracht wird. Dies kann den Vorteil haben, dass die Fahrzeugtreppe in einem eingeschobenen Zustand platzsparend ist

Die voran genannten Vorteile und/oder Merkmale der Erfindung müssen nicht in allen Ausführungsformen gleichzeitig vorhanden sein, sondern können untereinander beliebig zu neuen Ausführungsformen kombiniert werden.

Weitere Charakteristika und Vorteile der Erfindung werden im Verlauf der nachfolgenden Beschreibung ihrer Ausführungsformen ersichtlich, welche nur beispielhaft und nicht beschränkend in Zusammenschau mit den beigefügten Zeichnungen gegeben wird. Die Figuren sind als nicht maßstabsgetreue Schemazeichnungen zu verstehen. Größenbeziehungen sind daher beliebig und Verhältnisse können nicht abgeleitet werden. In den Figuren ist:
Figur 1 eine schematische Seitenansicht einer Fahrzeugtreppe in einer ersten Position.
Figur 2 eine schematische Seitenansicht einer Fahrzeugtreppe in einer zweiten Position.
Figur 3 eine schematische Seitenansicht einer Fahrzeugtreppe in einer eingeschobenen Position.
Figur 4 eine schematische Draufsicht einer Fahrzeugtreppe in einer zweiten Position.

Im Folgenden wird eine Ausführungsformen unter Bezugnahme auf die beigefügte Figur beschrieben. Einführend sei festgehalten, dass in den unterschiedlich beschriebenen Figuren gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

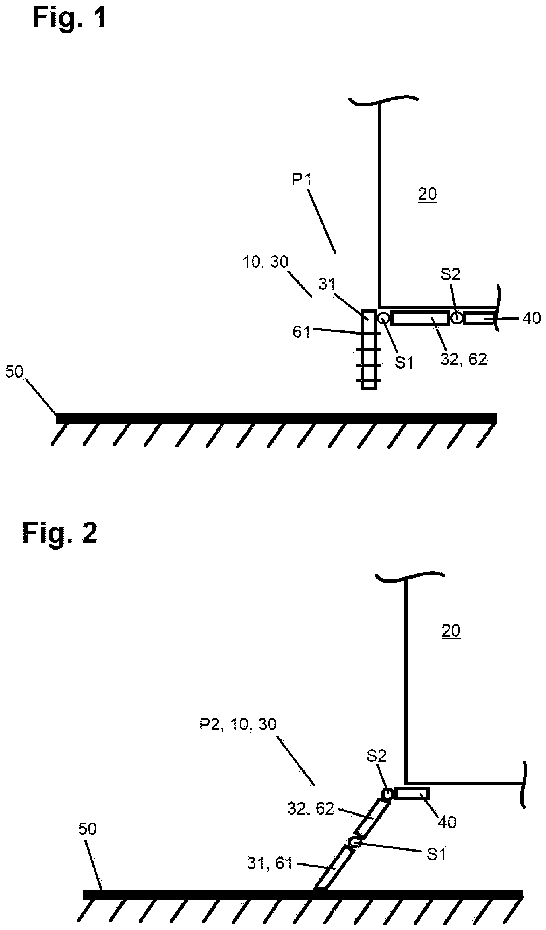

Unter anfänglicher Bezugnahme auf Figur 1 wird eine Fahrzeugtreppe 10 gezeigt, die an einen Fahrzeugaufbau 20 montiert ist. Der Fahrzeugaufbau 20 ist von einer Fahrzeugaufstandsfläche 50 beanstandet. Der Abstand rührt unter anderem von nicht gezeigten Reifen oder Ketten des Fahrzeugs her. Dargestellt ist die Fahrzeugtreppe in einer ersten Position, in welcher ein erstes Gestellteil 31 mit ersten Stufen 61 von dem Fahrzeugaufbau ausgezogen ist. Weiterhin ist das erste Gestellteil 31 in Bezug auf ein zweites Gestellteil 32 um eine erste Schwenkachse S1 hin zur Fahrzeugaufstandsfläche 50 geschwenkt bzw. abgeknickt. Die erste Schwenkachse S1 schneidet die Zeichenebene senkrecht, d.h. geht senkrecht in diese hinein bzw. steht aus ihr hervor. Das erste Gestellteil 31 berührt die Fahrzeugaufstandsfläche 50 nicht.

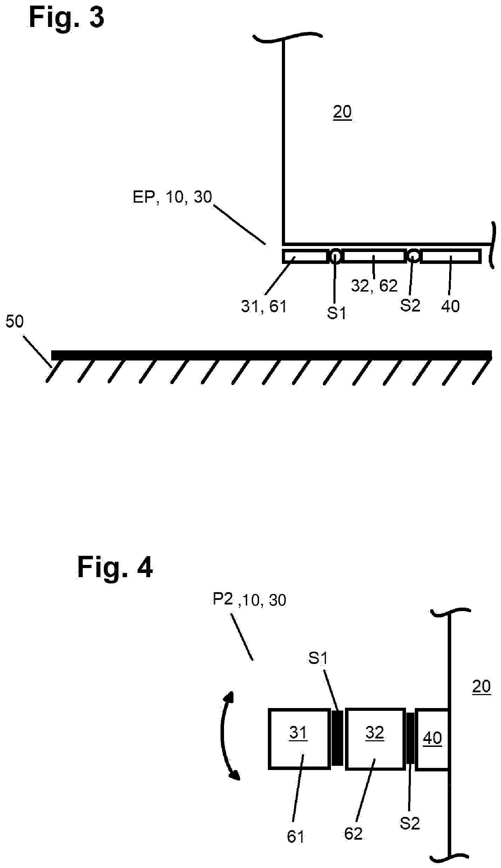

Die ersten Stufen 61 des ersten Gestellteils 31 und die nicht gezeigten zweiten Stufen 62 des zweiten Gestellteils 32 sind schwenkbar und werden benutzbar, wenn das jeweilige Gestellteil aus der horizontalen (siehe Fig. 3) geschwenkt wird. Das zweite Gestellteil 32 ist über eine zweite Schwenkachse S2, welche ebenfalls senkrecht zur Zeichenebene verläuft mit einem Podest 40 verbunden. Das zweite Gestellteil 32 und das Podest 40 sind eingeschoben in der in Fig. 1 dargestellten ersten Position.

In Fig. 2 ist das Treppengestell 30 der Fahrzeugtreppe 10 in der zweiten Position P2 dargestellt. Die Stufen 61 und 62 sind der Übersichtlichkeit wegen nicht eingezeichnet. Das erste Gestellteil 31 und das zweite Gestellteil 32 fluchten miteinander und sind nicht um die erste Schwenkachse S1 verschwenkt. Das erste und zweite Gestellteil 31 und 32 sind um die zweite Schwenkachse S2 verschwenkt und das Podest 40 ist teilweise ausgezogen. Das Treppengestell 30 steht mit dem ersten Gestellteil 31 auf der Fahrzeugaufstandsfläche 50 auf. In der zweiten Position P2 kann das erste Gestellteil 31 nicht um die erste Schwenkachse S1 bezüglich des zweiten Gestellteils 32 schwenken. Der Platzbedarf neben dem Fahrzeug ist in der zweiten Position P2 deutlich erhöht im Vergleich zur ersten Position P1. So kann in der ersten Position P1 die Fahrzeugtreppe schnell verwendet werden um auch bei beengten Platzverhältnissen neben dem Fahrzeugaufbau 20 (z.B. auf einer Fähre) in den Fahrzeugaufbau 20 zu gelangen.

Fig. 3 zeigt die Fahrzeugtreppe 10 in der eingeschobenen Position, in welcher das erste Gestellteil 31, das zweite Gestellteil 32 und das Podest unter bzw. in den Fahrzeugaufbau 20 eingeschoben ist. Die Stufen 61 und 62 sind der Übersichtlichkeit wegen nicht eingezeichnet.

Fig. 4 ist eine Draufsicht auf die in der zweiten Position P2 befindliche Fahrzeugtreppe 10, entsprechend Fig. 2. Das Treppengestell 30 kann zusammen mit dem Podest 40 bezüglich dem Fahrzeugaufbau 20 in beide Richtungen (siehe Pfeil) gedreht werden, so dass das Treppengestell 30 z.B. parallel zum Fahrzeugaufbau 20 verläuft. Bei der Drehbewegung kann das Podest 40 zumindest teilweise unter bzw. in den Fahrzeugaufbau 20 einschwenken. Die Drehachse (nicht gezeigt) verlauft senkrecht durch die Zeichenebene und durch das Podest 40. Das Podest 40 ist in allen Figuren optional und das erste und zweite Gestellteil bzw. das Treppengestell kann direkt mit dem Fahrzeugaufbau verbunden sein. Die Stufen 61 und 62 sind der Übersichtlichkeit wegen nicht eingezeichnet.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus der gezeigten und beschriebenen Ausführungsbeispiel können für sich eigenständige erfinderische Lösungen darstellen. Die den eigenständigen erfinderischen Lösungen zu grundliegende Aufgabe kann der Beschreibung entnommen werden

### BEZUGSZEICHENLISTE

- 10: Fahrzeugtreppe
- 20: Fahrzeugaufbau
- 30: Treppengestell
- 31: erstes Gestellteil
- 32: zweites Gestellteil
- 40: Podest
- 50: Fahrzeugstandfläche
- 61: erste Stufen
- 62: zweite Stufen

- S1: erste Schwenkachse
- S2: zweite Schwenkachse
- EP: Eingeschobene Position
- P1: erste Position
- P2: zweite Position

## Patentansprüche

1. Fahrzeugtreppe (10) umfassend ein zumindest zweiteiliges, in einem Einbauzustand der Fahrzeugtreppe aus einem Fahrzeugaufbau (20) ausziehbares Treppengestell (30), welches zumindest ein erstes Gestellteil (31) und ein zweites Gestellteil (32) umfasst, wobei das erste Gestellteil mit dem zweiten Gestellteil um eine erste Schwenkachse (S1) schwenkbar verbunden ist, und wobei das zweite Gestellteil mit dem Fahrzeugaufbau um eine zweite Schwenkachse (S2) schwenkbar verbunden ist, wobei das Treppengestell in zumindest eine eingeschobene Position (EP), eine erste Position (P1) und eine zweite Position (P2) gebracht werden kann, wobei in der ersten Position das erste Gestellteil um die erste Schwenkachse schwenkbar ist und in der zweiten Position das erste und zweite Gestellteil (31, 32) um die zweite Schwenkachse schwenkbar sind und fluchten miteinander.

2. Fahrzeugtreppe (10) nach Anspruch 1, wobei das Treppengestell (30) mit einem Podest (40) verbunden ist und das Podest mit dem Treppengestell in einem Einbauzustand der Fahrzeugtreppe aus dem Fahrzeugaufbau (20) ausziehbar ist, und wobei das zweite Gestellteil (32) schwenkbar um die zweite Schwenkachse (S2) mit dem Podest verbunden ist.

3. Fahrzeugtreppe (10) nach Anspruch 1 oder 2, wobei das Treppengestell (30) in einem Einbauzustand der Fahrzeugtreppe mit dem Podest (40) drehbar bezüglich dem Fahrzeugaufbau (20) ist.

4. Fahrzeugtreppe (10) nach einem der vorherigen Ansprüche, wobei in einem Einbauzustand der Fahrzeugtreppe der erste Gestellteil (31) in der ersten Position (P1) nicht auf einer Fahrzeugstandfläche (50) aufsteht und in der zweiten Position (P2) auf der Fahrzeugstandfläche aufsteht.

5. Fahrzeugtreppe (10) nach einem der vorherigen Ansprüche, wobei erste Stufen (61) des ersten Gestellteils (31) benutzbar werden, wenn dieses von der eingeschobenen Position (EP) in die erste Position (P1) gebracht wird.

6. Fahrzeugtreppe (10) nach einem der vorherigen Ansprüche, wobei zweite Stufen (62) des zweiten Gestellteils (32) benutzbar werden, wenn das Treppengestell (30) von der ersten Position (P1) in die zweite Position (P2) gebracht wird.
